# EUROPÄISCHE PATENTSCHRIFT

(11) **EP 3 012 498 B1**
(45) Veröffentlichungstag und Bekanntmachung des Hinweises auf die Patenterteilung: **24.06.2020**
(21) Anmeldenummer: 14192994.3
(22) Anmeldetag: 13.11.2014
(51) Int. Cl.: F16K 11/07

(54) **Mehrteiliges Schieberelement mit Aussendichtung für eine pneumatisch betriebene Hydraulikpumpe**
Multi-part slider element with external seal for a pneumatically operated hydraulic pump
Élément coulissant en plusieurs parties équipé d'une garniture d'étanchéité extérieure pour une pompe hydraulique à fonctionnement pneumatique

(30) Priorität: 10.10.2014 EP 14188382
(43) Veröffentlichungstag der Anmeldung: 27.04.2016
(73) Patentinhaber: HAWE Hydraulik SE, 85609 Aschheim (DE)
(72) Erfinder: Neumair, Georg, 85402 Thalhausen (DE); Verbeek, Hartmut, 81539 München (DE)
(74) Vertreter: Grosse Schumacher Knauer von Hirschhausen

(56) Entgegenhaltungen:
- EP-A1- 1 559 937
- WO-A1-00/11385
- DE-A1- 10 007 687
- DE-A1-102005 048 622
- DE-A1-102008 051 624
- DE-B- 1 167 139
- FR-A- 1 399 150
- US-A1- 2010 258 210

## Beschreibung

Die vorliegende Erfindung betrifft ein mehrteiliges Schieberelement mit Außendichtung für eine pneumatisch betriebene Hydraulikpumpe, ein Verfahren zur Herstellung desselben und ein Verfahren zum Montieren desselben in einem pneumatischen Steuerblock einer pneumatisch betriebenen Hydraulikpumpe.

Im Allgemeinen werden pneumatisch betriebene Hydraulikpumpen zur Druckölversorgung von Hydroverbrauchern, insbesondere zum Druckaufbau und Druckhalten verwendet, wobei die Hydroverbraucher vorwiegend im Aussetzbetrieb arbeiten. Da die Energieversorgung der Hydraulikpumpe mittels Druckluft erfolgt sind pneumatisch betriebene Hydraulikpumpen für den Einsatz in explosionsgefährdeten Umgebungen geeignet, wie z. B. in der Farbindustrie und pyrotechnischen Fabriken. In Einsatzfällen, in denen die pneumatisch betriebenen Hydraulikpumpen nur für Verbraucherbewegungen und nicht zum Druckhalten eingesetzt werden, werden in der pneumatischen Vorsteuerung Wegeschieber als Steuergeräte für die angeschlossenen Verbraucher verwendet. Andererseits sind bei Druckhalteaufgaben mit Pumpenstillstand leckölfreie Wegesitzventile gebräuchlich, da dann kein Luftverbrauch durch Nachpumpen zur Leckölergänzung auftritt.

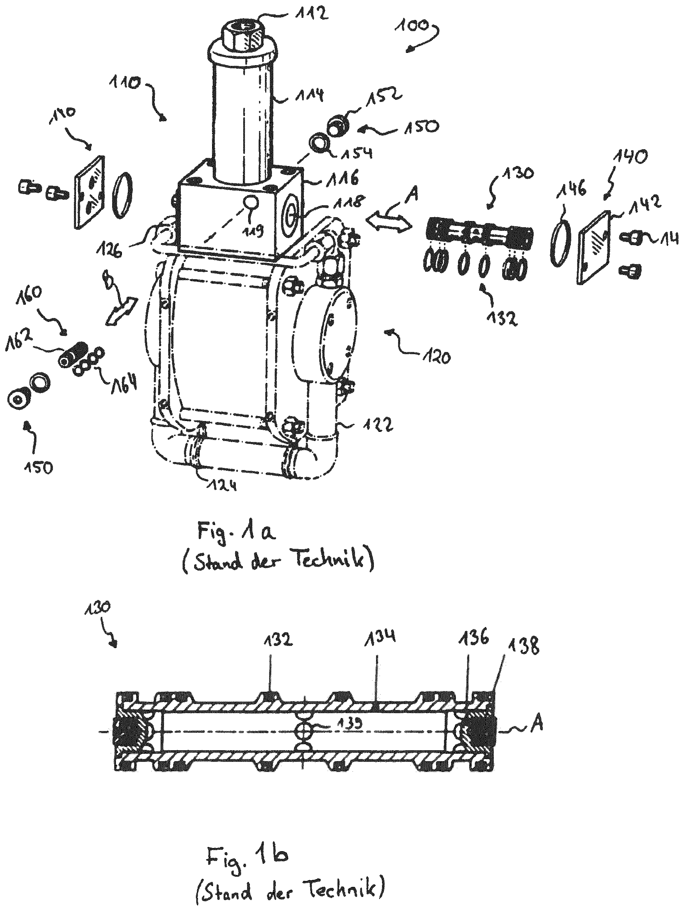

Mit Bezug auf Fig. 1 a wird eine bekannte pneumatisch betriebene Hydraulikpumpe beschrieben. Hierbei zeigt Fig. 1a eine ventilgesteuerte, wechselseitig arbeitende Pumpe 100, die nach dem Prinzip eines pneumo-hydraulischen Druckübersetzers arbeitet, bei dem antriebsseitig (luftseitig) ein mit niedrigem Druck beaufschlagter Kolben mit großer Fläche einen auf der hydraulischen Seite befindlichen Kolben mit kleiner Fläche gegen hohen Flüssigkeitsdruck verschiebt. Je nach Übersetzungsverhältnis, d. h. das Flächenverhältnis des Hydraulikkolbens zum Luftkolben, sind z.B. bei 6 bar Luftdruck hydraulische Drücke bis zu 630 bar oder z.B. bei 10 bar Luftdruck hydraulische Drücke bis zu 1.500 bar erreichbar.

Generell arbeitet die Pumpe 100 mit oszillierenden Bewegungen, wobei eine selbsttätige Hubumkehrsteuerung über ein eigen vorgesteuertes 4/2-Wege-Umsteuerventit in einem pneumatischen Steuerteil 110 erfolgt und das vorgesteuerte 4/2-Wege-Umsteuerventil jeweils in den Endlagen einen Umsteuerimpuls erhält. Ein hydraulisches Druckmittel im Hydraulikzylinder 120 wird dabei bei Hin- und Rückgang der Hubbewegung unter Ausnutzung der aus dem Druckluftnetz entnommenen Leistung gefördert, was unter optimaler Ausnutzung erfolgen kann, wenn der Leerhub (Saughub) auf der einen Seite mit dem Druckhub der Gegenseite zusammenfällt.

Über einen Druckluftanschluss 112 wird einem nicht dargestellten Druckluftnetz dadurch Leistung entnommen, dass Druckluft dem pneumatischen Steuerteil 110 zugeführt wird. Das pneumatische Steuerteil 110 umfasst dabei einen Schalldämpfer 114, der über einem Steuerblock 116 angeordnet ist. In dem Steuerblock 116 ist ein Schieberelement 130 in eine axiale Bohrung 118 des Steuerblocks 116 aufgenommen, die den Steuerblock entlang seiner Längsrichtung oder Axialrichtung (s. Doppelpfeil "A") durchsetzt. Enden der Bohrung 118 sind mit Abdeckelementen abgedeckt und abgedichtet, die als endseitige Abdeckplatten 142 durch Schrauben 144 an gegenüberliegenden axialen Endseiten des Steuerblocks angebracht und mit O-Ringe 146 abgedichtet sind. Das Schieberelement 130 ist entlang der Axialrichtung A in der Bohrung 118 des Steuerblocks 116 gleitend verschiebbar angeordnet. Eine Abdichtung erfolgt hier mittels O-Ringe 132, wie nachfolgend mit Bezug auf Fig. 1b näher erläutert wird.

Senkrecht zur Axialrichtung A ist über dem Schieberelement 130 ein Vorsteuerschieberelement 160 in einer entsprechenden Bohrung im Steuerblock 116 vorgesehen, wobei die Bohrung 119 den Steuerblock entlang einer Breitenrichtung B durchsetzt (s. Doppelpfeil "B"). Das Vorsteuerschieberelement 160 besteht aus einem Vorsteuerschieberkolben 162 und darauf aufgebrachten Außenabdichtungen gebildet aus O-Ringen 164. Weiterhin ist die Bohrung 119 endseitig mit Verschlusselementen 150 verschlossen, z.B. mit Verschlussschrauben 152 und Cu-Dichtringen 154 verschlossen.

Der durch ein Druckluftnetz (nicht dargestellt) über das pneumatische Steuerteil 110 angetriebene hydraulische Pumpzylinder 120 weist einen hydraulikseitigen Druckausgang 126 auf. Der am Druckausgang 126 ausgegebene Druck ist dabei über das Übersetzungsverhältnis durch einen am Druckanschluss 112 bereitgestellten Betriebsluftdruck bestimmt wie vorangehend angemerkt wurde.

Es wird angemerkt, dass der in Fig. 1a dargestellte Hydraulikpumpzylinder 120 für den Einbau in Ölbehälter ausgelegt ist, wobei aus einem nicht näher dargestellten Ölbehälter mittels der Saugleitungen 122 und einem Siebkorb 124 während der Hubbewegung Hydrauliköl entnommen wird. Alternativ kann eine Saugleitung und ein Rücklaufrohr anstelle der dargestellten Ausführungsform vorgesehen sein, wenn die Hydraulikpumpe 120 außerhalb eines Ölbehälters aufgestellt wird.

Mit Bezug auf Fig. 1b wird das Schieberelement 130 näher beschrieben. Hierbei sind O-Ringdichtungen 132 auf einen Schieberkolben 134 als Außendichtungen aufgezogen. Der Schieberkolben 134 ist als einteiliges Kolbenrohr ausgebildet, in dessen Mantelfläche zur Aufnahme der O-Ringe Nuten vorgesehen sind. Ferner sind in der Mantelfläche Steuerbohrungen 139 gebildet. Endseitig ist der Schieberkolben 134 mit einem Bundstopfen 136 verschlossen, der mittels eines Stopfens 138 in den Schieberkolben 134 an seinen axialen Enden eingepasst ist. Entsprechend kann auch der Vorsteuerschieber ausgebildet sein.

Der Schieber 130, wie auch der Vorsteuerschieber 160, ist, wie oben erwähnt, in den Steuerblock 116 verschiebbar aufgenommen. Die O-Ringe 132, wie auch die O-Ringe 164, dienen dabei der Abdichtung gegen Druckluftverlust am Außenumfang des Schieberkolbens 134 bzw. des Vorsteuerschieberkolbens 162. Um ein zuverlässiges Umsteuern mittels des Schiebers zu gewährleisten, wird der Schieber 130, wie auch der Vorsteuerschieber 160, mit Schmierfett eingeschmiert. Hierbei tritt das Problem auf, dass die Schmierung mit der Zeit durch die Luft reduziert wird. Durch die anliegende Druckluft wird das Schmierfett ferner auch durch die O-Ringe gedrückt. Eine abnehmende Schmierung führt zu einer unbefriedigenden Umsteuerung im pneumatischen Steuerteil 110. Eine Erneuerung des Schmierfettes resultiert in Stilistandzeiten.

Aus der DE 11 67 139 B ist ein solcher Steuerschieber bekannt.

Es besteht daher angesichts bekannter pneumatisch betriebener Hydraulikpumpen die Aufgabe, Stillstandszeiten hervorgerufen durch Schmierungsverlust an den Außendichtungen bekannter Steuerschieber zu verringern.

In einem Aspekt der Erfindung wird ein mehrteiliges Schieberelement mit Außendichtung für eine pneumatisch betriebene Hydraulikpumpe entsprechend den in Anspruch 1 definierten Merkmalen vorgeschlagen. Das mehrteilige Schieberelement umfasst mindestens ein erstes und zweites miteinander verbundenes Kolbenteil und mindestens ein erstes Dichtringelement, das aus Kunststoff besteht und axial zwischen dem ersten und dem zweiten Kolbenteil als Außendichtung angeordnet ist.

Dichtringelemente aus einem nicht aufweitbaren Material weisen vorteilsgemäß sehr geringe Toleranzen auf, da sie im Gegensatz zu herkömmlichen O-Ringdichtungen weniger elastisch sind. Ein mehrteiliger Aufbau für ein Schieberelement gestattet eine einfache Anbringung der Außendichtungen durch Aufstecken der nicht aufweitbaren Dichtringelemente auf ein Kolbenteil, das mit einem weiteren Kolbenteil zur Bildung des mehrteiligen Schieberelements verbunden wird.

Erfindungsgemäß besteht das Dichtringelement aus einem Kunststoff. Dies stellt den Vorteil bereit, dass entsprechende Dichtringelemente einfach und kostengünstig in der Massenproduktion herstellbar sind.

Erfindungsgemäß sind das erste und zweite Dichtringelement jeweils C-förmig oder V-förmig mit axialer Öffnung ausgebildet und die Dichtringelemente sind in mehrteiligen Schieberelementen derart orientiert angeordnet, dass die axialen Öffnungen vom zweiten Kolbenteil weggerichtet sind. Durch die C-förmige oder V-förmige Ausgestaltung der Dichtringelemente mit axialer Öffnung wird hierbei eine sehr zuverlässige Abdichtung gegen Druckluftverlust bereitgestellt, die sich aufgrund der alternierenden Orientierung der axialen Öffnungen entlang des Schiebers unabhängig von der Hubrichtung des Schiebers gegen die Innenwand der den Schieber aufnehmenden Bohrung in einem Steuerblock abstützen. Weiterhin wirken die axialen Öffnungen der Dichtringelemente einem Verlust von Schmiermittel entgegen, da Schmiermittel von den axialen Öffnungen zeitweise aufgenommen wird und sich darin ansammeln kann.

Erfindungsgemäß sind in der Mantelfläche des dritten Kolbenteils und in der Mantelfläche des ersten Kolbenteils jeweils eine Anschlagabstufung gebildet, gegen die sich jeweils ein entsprechendes des ersten und zweiten Dichtringelements abstützt, so dass die axiale Öffnung des Dichtringelements wenigstens teilweise frei liegt. Durch die wenigstens teilweise frei liegende axiale Öffnung kann bei der Beaufschlagung dieser mit Druckluft eine zuverlässigere Abdichtung erreicht werden und es wird einem Verlust an Schmiermittel wirkungsvoll entgegengewirkt.

Gemäß einer weiteren vorteilhaften Ausgestaltung hierin umfasst der Kunststoff PTFE. Dies ist sehr vorteilhaft, da PTFE einen sehr geringen Reibungskoeffizienten aufweist und die Haftreibung genau so groß ist wie die Gleitreibung, so dass ein Übergang vom Stillstand zur Bewegung insbesondere ohne Ruck stattfinden kann.

Gemäß einer weiteren vorteilhaften Ausgestaltung hierin ist der Kunststoff wenigstens mit PTFE beschichtet oder besteht aus PTFE. Die Beschichtung mit PTFE stellt den Vorteil bereit, dass reibungsarme Dichtringelemente mit sehr geringer Toleranz und geringem Reibungskoeffizienten bereitgestellt werden können, die gegenüber vollständig aus PTFE bestehenden Dichtringelementen kostengünstiger sind. Ein vollständig aus PTFE hergestelltes Dichtringelement hingegen weist nicht nur eine reibungsarme Beschichtung auf, die nur den mit PTFE verbundenen Vorteil geringer Reibung und ruckloser Bewegung ermöglicht, solange die Beschichtung nicht beschädigt wird bzw. verletzt ist.

Gemäss Erfindung umfasst das Schieberelement ferner ein mit dem zweiten Kolbenteil verbundenes drittes Kolbenteil und ein zweites Dichtringelement, das axial zwischen dem dritten Kolbenteil und dem zweiten Kolbenteil als Außendichtung angeordnet ist. Es wird daher nicht nur ein kleinerer Vorsteuerschieber, sondern auch größere Schieber als erfindungsgemäße mehrteilige Schieberelemente ausgeführt.

In einer weiteren vorteilhaften Ausgestaltung hierin weist das zweite Kolbenteil einander axial gegenüberliegende Anschlagflächen auf, gegen die sich jeweils eines von dem ersten und zweiten Kolbenteil zusammen mit dem entsprechenden Dichtringelement abstützen. Dadurch wird vorteilhafterweise eine genaue Positionierung der Kolbenteile und Dichtringelemente zueinander eingehalten.

In einer weiteren vorteilhaften Ausgestaltung hierin ist das zweite Kolbenteil hülsenartig ausgestaltet und das erste Kolbenteil und das dritte Kolbenteil sind in das zweite Kolbenteil eingesteckt. Auf diese Weise ist eine einfache Verbindung der Kolbenteile vorgesehen.

Gemäß einer weiteren Ausgestaltung hierin sind im ersten und dritten Kolbenteil Steuerbohrungen gebildet.

Gemäß einer vorteilhaften Ausgestaltung der Erfindung sind die Kolbenteile miteinander verpresst. Hierdurch wird auf eine feste Verbindung der Kolbenteile ohne aufwendige Behandlung, wie schweißen und dergleichen, vorgesehen.

Gemäß einer weiteren vorteilhaften Ausgestaltung der Erfindung sind die Kolbenteile aus Metall, vorzugsweise Aluminium, gebildet. Die Kolbenteile aus Metall, vorzugsweise Aluminium, sind einfach zu bearbeiten und gleichzeitig stabil und dauerhaft.

Gemäß einer weiteren vorteilhaften Ausgestaltung der verschiedenen Aspekte der Erfindung ist das Schieberelement ein Steuerschieber als Einsatz in einer Schieberbuchse eines pneumatischen Steuerblocks einer pneumatisch betriebenen Hydraulikpumpe.

In der folgenden detaillierten Beschreibung werden einige anschauliche Ausführungsformen der Erfindung mit Bezug auf die beiliegenden Figuren beschrieben, wobei:
- Fig. 1a:: eine bekannte pneumatisch betriebene Hydraulikpumpe zeigt;
- Fig. 1b:: einen bekannten Schieber aus der in Fig. 1A dargestellten Hydraulikpumpe in einer Querschnittsansicht darstellt;
- Fig. 2a:: ein mehrteiliges Schieberelement gemäß einer anschaulichen Ausführungsform der Erfindung in einer Querschnittsansicht darstellt;
- Fig. 2b:: ein mehrteiliges Schieberelement gemäß einer weiteren anschaulichen Ausführungsform der Erfindung in einer Querschnittsansicht darstellt;
- Fig. 3:: eine pneumatisch betriebene Hydraulikpumpe gemäß einer anschaulichen Ausführungsform der Erfindung darstellt; und
- Fig. 4a:: ein einteiliges Schieberelement gemäß einer nicht unter die Erfindung fallenden Ausführungsform in einer perspektivischen Ansicht darstellt;
- Fig. 4b:: das einteilige Schieberelement aus Fig. 4a in einer Querschnittansicht darstellt.

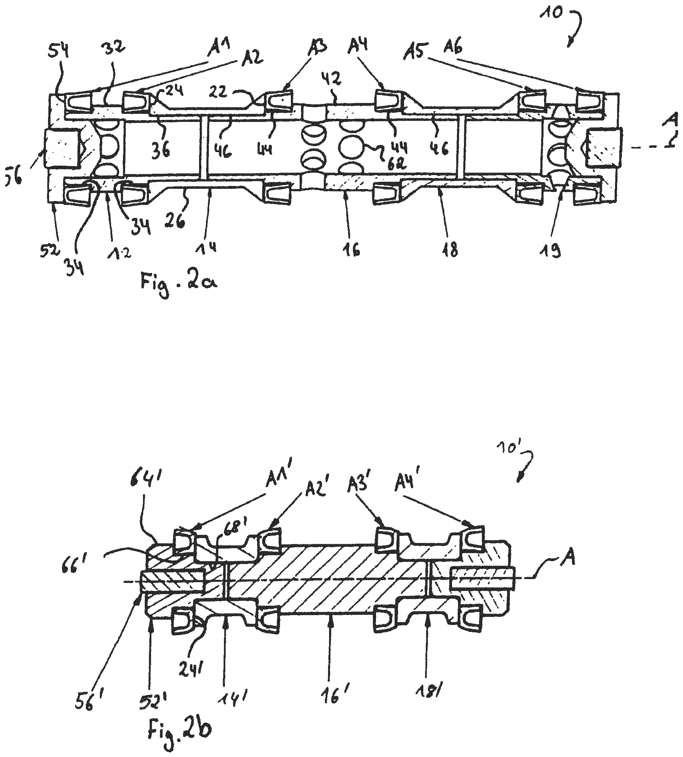

Fig. 2a stellt ein mehrteiliges Schieberelement 10 gemäß einigen anschaulichen Ausführungsformen der Erfindung dar. Hierbei sind ein erstes Kolbenteil 12, ein zweites Kolbenteil 14, ein drittes Kolbenteil 16, ein viertes Kolbenteil 18 und ein fünftes Kolbenteil 19 miteinander verbunden. Das Schieberelement 10 ist darstellungsgemäß als Steckverbindung ausgeführt, wobei das erste Kolbenteil 12 und das dritte Kolbenteil 16 in das zweite Kolbenteil 14 eingesteckt sind, das hülsenartig ausgebildet ist. Das dritte Kolbenteil 16 und das fünfte Kolbenteil 19 sind mittels dem vierten Kolbenteil 18 verbunden, wobei das dritte Kolbenteil 16 und das fünfte Kolbenteil 19 in das vierte Kolbenteil 18 eingesteckt sind, das entsprechend dem zweiten Kolbenteil 14 hülsenartig ausgebildet ist. Die Kolbenteile 12, 14, 16, 18 und 19 sind als Hohlkolbenteile ausgebildet und weisen jeweils am Außenumfang Bereiche mit unterschiedlichen Außendurchmessern auf. Zusätzlich oder alternativ können wenigstens einige der Kolbenteile durch schweißen und/oder kleben miteinander verbunden sein.

Das erste Kolbenteil 12 weist einen Abschnitt 32 mit großem Außendurchmesser auf, an dessen axial gegenüberliegenden Enden Abschnitte 34 mit einem relativ zum großen Außendurchmesser kleineren Außendurchmesser angefügt sind. An einem der Bereiche 34 mit kleinerem Außendurchmesser ist wiederum ein Bereich mit 36 mit relativ zum kleineren Außendurchmesser noch kleinerem Außendurchmesser angefügt, so dass der Außendurchmesser vom Bereich 32 zum Bereich 36 entlang einer Axialrichtung A des Schieberelements 10 schrittweise abnimmt. Insbesondere sind zwischen dem Bereich 32 und den Bereichen 34 und zwischen einem der Bereiche 34 und dem sich anschließenden Bereich 36 radiale Anschlagflächen ausgebildet. Der Außendurchmesser des Bereichs 36 ist auf den Innendurchmesser des zweiten Kolbenteils 14 derart abgestimmt, dass das erste Kolbenteil 12 bis zur Anschlagfläche am Ende des Bereichs 36 in das zweite Kolbenteil 14 einsteckbar ist. Damit stützt sich die Anschlagfläche am Ende des Bereichs 36 gegen eine Anschlagfläche 24 des zweiten Kolbenteils 14 ab.

Auf die Bereiche 34 sind nicht aufweitbare Dichtringelemente A1 und A2 aufgesteckt. Die Dichtringelemente A1 und A2 sind C-förmig oder V-förmig mit jeweils axialer Öffnung ausgebildet und auf den Bereichen 34 angeordnet. Der Innendurchmesser der Dichtringelemente A1 und A2 ist derart auf den Außendurchmesser der Bereiche 34 abgestimmt, dass die nicht aufweitbaren und insbesondere nicht elastischen Dichtringelemente A1 und A2 auf die Bereiche 34 aufsteckbar sind.

Das Dichtringelement A2 stützt sich mit einer rückseitigen Oberfläche gegen die Anschlagfläche 24 des zweiten Kolbenteils 14 ab. Dabei ist das Dichtringelement A2 derart orientiert auf den Bereich 34 aufgebracht, dass die axiale Öffnung dem Bereich 32 zugerichtet ist und von der Anschlagfläche 24 des zweiten Kolbenteils 14 weggerichtet ist.

Auf das dem zweiten Kolbenteil 14 gegenüberliegende Ende des ersten Kolbenteils 12 ist ein Bundstopfen 52 aufgesteckt, der sich mit einem radial abstehenden Flanschbereich gegen eine rückseitige Oberfläche des Dichtringelements A1 abstützt. Damit ist das Dichtringelement A1 über den Bereich 34 zwischen dem Bundstopfen 52 und dem Bereich 32 derart eingepasst, dass die axiale Öffnung des Dichtringelements A1 dem Bereich 32 zugerichtet ist und von dem Flanschbereich 54 weggerichtet ist, gegen das sich das Dichtringelement A1 rückseitig abstützt.

Der Bundstopfen 52 ist zusätzlich mit einem Stopfen 56 am axialen Ende des ersten Kolbenteils 12 gegenüber dem zweiten Kolbenteil 14 fixiert. Entsprechend ist ein weiterer Bundstopfen (in Fig. 2a nicht bezeichnet) an einem axialen Ende des fünften Kolbenteils fixiert.

Es wird darauf hingewiesen, dass die Dichtringelemente A1 und A2 derart orientiert auf dem ersten Kolbenteil 12 angebracht sind, dass die axialen Öffnungen der Dichtringelemente A1 und A2 einander zuweisen bzw. einander zugerichtet sind. Dadurch wird sichergestellt, dass je nach axialer Verschiebung, insbesondere hinsichtlich der in Fig. 2a dargestellten Orientierung, entsprechend einer Verschiebung nach links oder nach rechts des mehrteiligen Schieberelements 10, eine bessere Abdichtung durch Aufweiten des Dichtringelements A1 bei einer Verschiebung des Schieberelements 10 nach rechts bzw. nach Aufweitung des Dichtringelements A2 bei einer Verschiebung des Schieberelements 10 nach links erreicht wird. Im Allgemeinen weitet sich das Dichtringelement auf, dessen axiale Öffnung entlang der Richtung orientiert ist, in die eine Verschiebung erfolgt. "Aufweiten" bedeutet, dass sich das Dichtringelement besser abdichtend gegen eine Innenwand einer das Schieberelement 10 aufnehmenden Bohrung abstützt oder anlegen. Es wird somit einem Druckluftverlust durch die Orientierung der C-förmigen oder V-förmigen Dichtringelemente vorteilhaft entgegengewirkt. Ferner ist eine Stabilität der Dichtringelemente gewährleistet, da sie sich gegen eine große Anschlagfläche (vgl. Anschlagflächen 22, 24, 54 in Fig. 2a) abstützen. Weiterhin wird ein Schmiermittelverlust an den Dichtringelementen wirkungsvoll verhindert.

Das dritte Kolbenteil 16 weist einen Bereich 42 mit maximalem Außendurchmesser auf, dem sich axial gegenüberliegend Bereiche 44 mit kleinerem Außendurchmesser (ähnlich den Bereichen 34) anschließen, an die sich wiederum axial gegenüberliegend Bereiche 46 mit kleinsten Außendurchmesser (ähnlich den Bereichen 36) anschließen. Der Außendurchmesser der Bereiche 46 ist dabei derart auf den Innendurchmesser des hülsenartig ausgebildeten zweiten Kolbenteils 14 abgestimmt, dass das dritte Kolbenteil 16 entlang der Bereiche 46 in das zweite Kolbenteil 14 einsteckbar ist. Weiterhin ist zwischen den Bereichen 44 und 46 eine Anschlagfläche ausgebildet, die eine Einstecktiefe des dritten Kolbenteils 16 in das zweite Kolbenteil 14 begrenzt. Entsprechendes gilt für die Verbindung des dritten Kolbenteils 16 mit dem vierten Kolbenteil 18 am axialen Ende des dritten Kolbenteils 16, das der Verbindung mit dem zweiten Kolbenteil 14 gegenüberliegt. Durch die Begrenzung der Einstecktiefe des ersten und/oder dritten und/oder fünften Kolbenteil in das entsprechende zweite und/oder vierte Kolbenteil wird auch eine Nut mit einer definierten Breite (Abmessung entlang der Axialrichtung A) in den Bereichen 34, 44 usw. gebildet, in die die Dichtringelemente A1 bis A5 entsprechend eingepasst werden. Damit wird sichergestellt, dass die Dichtringelemente im montierten Schieberelement nicht axiales Spiel haben und axial verrutschen können. Eine Einstecktiefe der Kolbenteile 12, 16 und/oder 19 kann daher derart eingestellt werden, dass z.B. eine kleine Lücke zwischen den Kolbenteilen in den hülsenartigen Kolbenteilen gebildet wird.

In Entsprechung mit dem Dichtringelement A2 sind über den Bereichen 44 Dichtringelemente A3 und A4 angeordnet. Die Dichtringelemente A3 und A4 sind ähnlich den Dichtringelementen A1 und A2 als C-förmige oder V-förmige Dichtringelemente mit axialer Öffnung ausgebildet, wobei die Dichtringelemente A3 und A4 derart angeordnet sind, dass die axialen Öffnungen einander zuweisen bzw. zugerichtet sind.

Über dem fünften Kolbenteil 19 sind weitere Dichtringelemente A5 und A6 angeordnet, die ähnlich den Dichtringelementen A1 bis A4 ausgebildet sind und entsprechend den Dichtringelementen A1 und A2 über dem fünften Kolbenteil 19 bereitgestellt sind. Diesbezüglich wird auf die entsprechende Beschreibung zu den Dichtringelementen A1 und A2 verwiesen, wobei das Dichtringelement A5 in Entsprechung mit dem Dichtringelement A2 und das Dichtringelement A6 in Entsprechung zu dem Dichtringelement A1 zu sehen ist.

Das Innere des hohlen, mehrteiligen Schieberelements 10 steht mit der Umgebung des mehrteiligen Schieberelements 10 durch Steuerbohrungen 62 in Verbindung, die im Mantel des mehrteiligen Steuerkolbens 10 gebildet sind. Die Steuerbohrungen 62 sind in den Kolbenteilen 12, 16 und 19 gebildet. Insbesondere sind die Steuerbohrungen 62 in den Bereichen mit maximalem Außendurchmesser vorgesehen, da diese Bereiche zum einen nicht durch Kolbenteile 14 und 18 und Dichtringelemente A1 bis A6 bedeckt sind, zum anderen diese Bereiche aufgrund des dickeren Außendurchmessers eine dickere Wandstärke aufweisen, was eine größere Stabilität trotz Steuerbohrungen 62 bedeutet.

Mit Bezug auf Fig. 2b wird eine alternative Ausführungsform zu dem in Fig. 2a dargestellten Schieberelement 10 beschrieben. Es wird angemerkt, dass ähnliche Bezugszeichen in den Fig. 2a und 2b ähnliche Elemente bezeichnen. In Fig. 2b ist ein mehrteiliges Schieberelement 10' dargestellt, dass sich prinzipiell von dem in Fig. 2a dargestellten mehrteiligen Schieberelement 10 darin unterscheidet, dass die Kolbenteile 12, 19 durch Bundstopfen 52' ersetzt sind, die Bereiche mit unterschiedlichen Außendurchmessern aufweisen. Der Bundstopfen 52' weist einen Bereich 64' mit maximalem Außendurchmesser auf, an dem sich einseitig ein Bereich 66' mit kleinerem Außendurchmesser anschließt, an dem sich wiederum ein Bereich 68' mit minimalem Außendurchmesser anschließt. Der Außendurchmesser des Bereichs 68' ist insbesondere auf den Innendurchmesser eines hülsenartig ausgebildeten Kolbenteils 14' abgestimmt, so dass der Bundstopfen 52' entlang des Bereichs 68' in das hülsenartig ausgebildete Kolbenteil 14' bis zu einer Tiefe einsteckbar ist, die durch den Bereich 68' festgelegt ist. Insbesondere ist der Bundstopfen 52' bis zu einer Anschlagfläche eingesteckt, die zwischen dem Bereich 68' und dem Bereich 66' ausgebildet ist. Auf dem Bereich 66' ist ein Dichtringelement A1' aufgesteckt, d. h., der Außendurchmesser des Bereiches 66' ist auf den Innendurchmesser des Dichtringelements A1' abgestimmt. Das Dichtringelement A1' ist zwischen einer Anschlagfläche, die zwischen den Bereichen 64' und 66' ausgebildet ist, und einer Anschlagfläche eingepasst, die durch das Kolbenteil 14' gebildet wird. Das Dichtungselement A1' ist C-förmig oder V-förmig mit axialer Öffnung ausgebildet, wobei die axiale Öffnung den Bereich 64' zuweist. Damit stützt sich der Dichtring A1' mit einer rückseitigen Oberfläche gegen die Anschlagfläche ab, die durch das Kolbenteil 14' bereitgestellt wird.

In eine axiale Öffnung des Bundstopfens 52' ist ein Stopfen 56' eingefügt, so dass der Bundstopfen 52' in dem hülsenartig ausgebildeten Kolbenteil 14' fixiert ist.

Das Kolbenteil 16' ist ähnlich dem Kolbenteil 16 mit einem Bereich mit maximalem Außendurchmesser, einem Bereich mit kleinerem Außendurchmesser und einem Bereich mit minimalem Außendurchmesser ausgebildet, so dass bezüglich der Verbindung mit dem hülsenartig ausgebildeten Kolbenteil 14' auf die entsprechende Beschreibung zu der Verbindung des Kolbenteils 16 mit dem Kolbenteil 14 verwiesen wird und hinsichtlich der Dichtringelemente A2' und A3' auf die entsprechende Beschreibung der Dichtringelemente A3 und A4 verwiesen wird. Die Verbindung des Kolbenteils 16' mit dem Kolbenteil 18' ist ähnlich der Verbindung des Kolbenteils 16' mit dem Kolbenteil 14'. Endseitig ist das Kolbenteil 18' mit einem Bundstopfen verschlossen, der ähnlich dem Bundstopfen 52' ausgebildet ist. Das Dichtringelement A4' ist hierbei, bis auf Spiegelsymmetrie, in Entsprechung zu dem Dichtringelement A1' zu verstehen.

Es wird angemerkt, dass eine Orientierung der axialen Öffnung der Dichtringelemente A1 bis A6 bzw. A1' bis A4' entlang der Axialrichtung A über das Schieberelement 10 bzw. 10' hinweg alternierend ist.

Die Dichtringelemente A1 bis A6 bzw. A1' bis A4' sind aus einem nicht aufweitbaren und insbesondere nicht elastischen Material. In einigen Ausführungsformen ist das nicht aufweitbare Material ein Kunststoff. Gemäß einigen beispielhaften Ausführungsformen umfasst das nicht aufweitbare Material PTFE. Beispielsweise können die Dichtringelemente A1 bis A6 bzw. A1' bis A4' mit PTFE beschichtet sein. Gemäß anderen beispielhaften Ausführungsformen bestehen die Dichtringelemente A1 bis A6 bzw. A1' bis A4' vollständig aus PTFE.

Gemäß einigen anderen Ausführungsformen sind die Kolbenteile 12, 14, 16, 18 und 19 bzw. 14', 16' und 18' aus einem Metall, vorzugsweise Aluminium, gebildet.

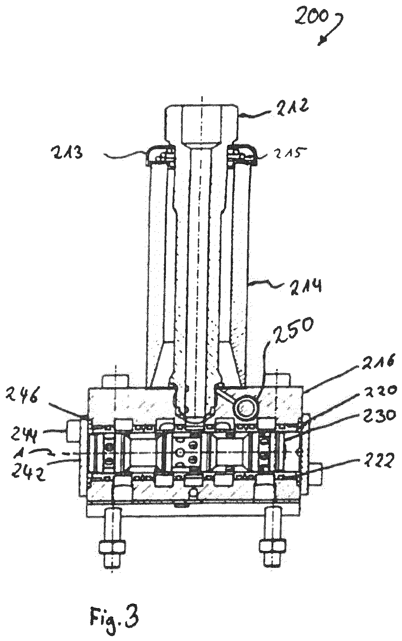

Mit Bezug auf Fig. 3 wird nachfolgend eine beispielhafte Ausführungsform eines pneumatischen Steuerelements für eine Hydraulikpumpe beschrieben. Das pneumatische Steuerelement 200 weist einen Anschlussstutzen 212 für Druckluft auf, der zum Betrieb einer Hydraulikpumpe (nicht dargestellt) verwendet wird. Der Anschlussstutzen ist mit einem Steuerblock 216 des pneumatischen Steuerteils 200 verbunden, wobei zwischen dem Anschlussstutzen 212 und dem Steuerblock 216 ferner ein Schalldämpfer 214 angeordnet ist, der einen Deckel 213 und eine in den Deckel 213 aufgenommene konische Feder 215 aufweist. In eine dem Steuerblock 216 entlang seiner Längsrichtung bzw. Axialrichtung durchsetzenden Bohrung 220 ist eine Steuerbuchse 222 aufgenommen, in der ein Schieberelement 230 axial verschiebbar angeordnet ist. Das Schieberelement 230 kann entsprechend einem der mehrteiligen Schieberelemente 10, 10' ausgeführt sein, die vorangehend beschrieben sind.

Die den Steuerblock 216 durchsetzende Bohrung 220 ist endseitig mit Abdeckplatten 242 abgeschlossen, die mittels Schraubenelementen 244 an dem Steuerblock 216 angebracht und durch O-Ringdichtungen 246 abgedichtet sind. Entlang einer Richtung, senkrecht zur Axialrichtung A, ist über der Bohrung 220 eine weitere Bohrung vorgesehen, in die ein Vorsteuerschieberelement 250 eingeführt ist. Das Vorsteuerschieberelement 250 kann z.B. gemäß dem mehrteiligen Schieberelement 10' ausgebildet sein, das hinsichtlich Fig. 2b oben beschrieben ist.

Gemäß einiger beispielhafter Ausführungsformen wird das mehrteilige Schieberelement 10 und/oder 10' für eine pneumatisch betriebene Hydraulikpumpe dadurch hergestellt, dass ein erstes Dichtringelement, beispielsweise A3 oder A4, und/oder A2' oder A3', auf ein erstes Kolbenteit 16 bzw. 16' aufgeschoben wird und ein zweites Dichtringelement, z.B. A1' oder A4' und/oder A2 oder A5, auf ein zweites Kolbenteil z.B. 12 oder 19 und/oder 52' aufgeschoben wird. Anschließend werden die mit Dichtringen bestückten Kolbenteile in hülsenartig ausgebildete Kolbenteile, beispielsweise 14 oder 18 und/oder 14' oder 18', eingesteckt und damit miteinander verbunden. Vorteilhafterweise werden die Kolbenteile miteinander verpresst, können aber auch anderweitig miteinander verbunden sein. Zum Beispiel können die Kolbenteile mittels einer axialen Schraube verbunden sein, die durch in den endseitigen Kolbenteilen gebildete Innengewinde die Kolbenteile des mehrteiligen Schieberelements miteinander lösbar verbinden, wodurch es möglich ist, Dichtringelemente bei Bedarf auszutauschen. Alternativ können wenigstens einige der Kolbenteile über einen Bajonettverschluss verbunden sein. Es wird angemerkt, dass in einigen anschaulichen Ausführungsformen wenigstens einige Kolbenteile miteinander dauerhaft verbunden sind, d.h. diese Kolbenteile können nicht mehr voneinander getrennt werden, ohne das Schieberelement und/oder einzelne Komponenten davon nachhaltig zu ändern, etwa zu beschädigen.

Gemäß einiger beispielhafter Ausführungsformen der Erfindung kann ein Schieberelement, z.B. das Schieberelement 10 oder das Schieberelement 10', für eine pneumatisch betriebene Hydraulikpumpe dadurch hergestellt werden, dass ein erstes Dichtringelement auf ein erstes Kolbenteil und ein zweites Dichtringelement auf ein zweites Kolbenteil aufgeschoben werden und anschließend das erste Kolbenteil mittels eines Hülsenelements mit dem zweiten Kolbenteil dadurch verbunden wird, dass beide Kolbenteile in das Hülsenelement eingesteckt werden, wobei die Dichtringelemente aus einem nicht aufweitbaren Kunststoff gebildet sind. Gemäß einiger spezieller Ausführungsformen hierin wird das mehrteilige Schieberelement vor der Montage in einem pneumatischen Steuerblock einer pneumatisch betriebenen Hydraulikpumpe lediglich mit Öl, beispielsweise Hydrauliköl, eingeölt, wobei das mehrteilige Schieberelement 230 zur Montage des mehrteiligen Schieberelements im pneumatischen Steuerteil 200 vor der Montage lediglich mit Hydrauliköl eingeölt, wobei insbesondere auf Schmierfett verzichtet wird. Das lediglich mit Hydrauliköl eingeölte Schieberelement wird dann in die Bohrung 220 des Steuerblocks 216 eingeführt. Entsprechend wird der Vorsteuerschieber 250 im Steuerblock 216 montiert. Alternativ kann eine Schmierung mit Fett vorgesehen sein.

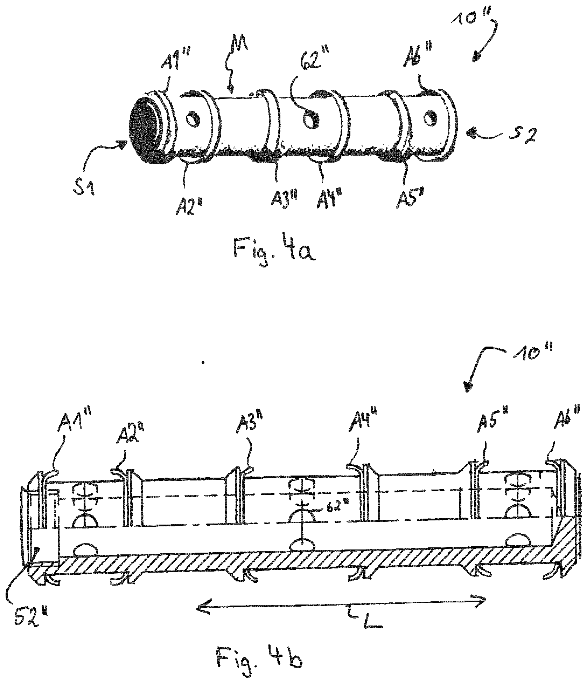

Alternativ zu den vorangehend hinsichtlich der Fig. 2a und 2b beschriebenen Schieberelementen 10 und 10' wird nun mittels der Fig. 4a und 4b eine alternative Ausgestaltung eines nicht unter die Erfindung fallenden Schieberelements beschrieben. Fig. 4a zeigt schematisch in einer perspektivischen Ansicht ein Schieberelement 10", dessen Querschnittansicht in Fig. 4b schematisch dargestellt ist. Das Schieberelement 10" ist einteilig gebildet und ist von zylindrischer Gestalt mit einer Mantelfläche M und gegenüberliegenden Seitenflächen S1, S2. Weiterhin sind in der Mantelfläche M Steuerbohrungen 62" gebildet. Die Steuerbohrungen 62" sind dabei ähnlich den Steuerbohrungen 62 und 62', die hinsichtlich der Schieberelemente 10 und 10' vorangehend beschrieben wurden.

Weiterhin weist das Schieberelement 10" eine Außendichtung auf, mit der es einteilig ausgebildet ist. Die Außendichtung umfasst dabei mehrere Dichtlamellen A1", A2", A3", A4", A5" und A6", die in der Mantelfläche M gebildet sind und davon abstehen. Insbesondere sind die Dichtlamellen A1" bis A6" in der Mantelfläche M als in Umfangsrichtung um die Mantelfläche M davon abstehende Auskragungen ausgebildet.

Fig. 4b stellt schematisch eine Querschnittansicht des Schieberelements 10" dar. Der in Fig. 4b dargestellte Querschnitt ist entlang einer Längsrichtung L des Schieberelements 100 genommen. Der Begriff Längsrichtung bezeichnet hierbei eine Richtung entlang welcher eine Abmessung des Schieberelements 10" maximal ist.

Wie vorangehend erläutert sind die Dichtlamellen A1" bis A6" in der Mantelfläche M des Schieberelements 10" gebildet und stehen davon nach außen ab. Gemäß dem dargestellten anschaulichen Beispiel weisen die Dichtlamellen A1" bis A6" dabei eine Krümmung in Längsrichtung L auf, wobei durch jede der Dichtlamellen A1" bis A6" und der Mantelfläche M eine seitliche Öffnung gebildet wird, so dass die Außendichtung des Schieberelements 10" an den Dichtlamellen A1" bis A6" seitliche Öffnungen aufweist. Gemäß eines bevorzugten Beispiels hierin sind die seitlichen Öffnungen derart ausgerichtet, dass sie in alternierender Abfolge jeweils zu einer der Seitenflächen S1 und S2 weisen. Dies bedeutet, dass zu jeder Dichtlamelle der Dichtlamellen A1" bis A6" eine direkt benachbart angeordnete Dichtlamelle existiert, so dass die seitliche Öffnungen beider benachbarter Dichtlamellen einander zugerichtet sind. Beispielsweise sind die seitlichen Öffnungen gebildet durch die benachbarten Dichtlamellen A1" und A2" einander zugerichtet. Weiterhin sind die seitlichen Öffnungen der benachbarten Dichtlamellen A3" und A4" einander zuweisend ausgerichtet. Außerdem sind die seitlichen Öffnungen gebildet durch die benachbarten Dichtlamellen A5" und A6" einander zuweisend ausgerichtet. Dies führt dazu, dass bei einer Bewegung des Schieberelements 10" entlang der Längsrichtung L in einander entgegengesetzte Richtungen immer eine seitliche Öffnung entlang der Bewegungsrichtung orientiert ist, während eine benachbarte weitere seitliche Öffnung entgegen der Bewegungsrichtung weist. Dadurch wird eine zuverlässige Abdichtung durch die Außendichtung des Schieberelements 10" bereitgestellt.

Zusammenfassend wird gemäß einem Aspekt der Erfindung ein mehrteiliges Schieberelement mit Außendichtung für eine pneumatisch betriebene Hydraulikpumpe bereitgestellt.

## Patentansprüche

1. Mehrteilig ausgebildetes Schieberelement (10; 10') mit Außendichtung für eine pneumatisch betriebene Hydraulikpumpe, wobei das Schieberelement (10; 10') ein erstes und zweites miteinander verbundenes Kolbenteil (12, 14; 52',14') und ein mit dem zweiten Kolbenteil (14; 14') verbundenes drittes Kolbenteil (16; 16') aufweist, wobei das Schieberelement ferner ein erstes Dichtringelement (A2, A1') und ein zweites Dichtringelement (A3; A2') aufweist, wobei das erste und das zweite Dichtringelement aus einem Kunststoff bestehen und wobei das erste Dichtringelement (A2, A1') axial zwischen dem ersten und zweiten Kolbenteil (12, 14; 52',14') als Außendichtung angeordnet ist und wobei das zweite Dichtringelement (A3, A2') axial zwischen dem dritten Kolbenteil (16; 16') und dem zweiten Kolbenteil (14; 14') als Außendichtung angeordnet ist, **dadurch gekennzeichnet, dass** das erste und zweite Dichtringelement (A2, A3; A1', A2') jeweils C-förmig oder V-förmig mit einer axialen Öffnung ausgebildet und die Dichtringelemente (A2, A3; A1', A2') im mehrteiligen Schieberelement (10; 10') derart orientiert angeordnet sind, dass die axialen Öffnungen vom zweiten Kolbenteil (14; 14') weggerichtet sind, wobei in der Mantelfläche des dritten Kolbenteils (16; 16') und in der Mantelfläche des ersten Kolbenteils (12; 52') jeweils eine Anschlagabstufung gebildet ist, gegen die sich jeweils das entsprechende Dichtringelement (A2, A3; A1', A2') abstützt, so dass die axialen Öffnungen wenigstens teilweise freiliegen.

2. Schieberelement (10; 10') nach Anspruch 1, wobei der Kunststoff wenigstens mit PTFE beschichtet ist oder aus PTFE besteht.

3. Schieberelement (10; 10') nach Anspruch 1 oder 2, wobei das zweite Kolbenteil (14; 14') einander axial gegenüberliegende Anschlagflächen (22, 24) aufweist, gegen die sich jeweils eines von dem ersten und dritten Kolbenteil (12, 16; 52', 16') zusammen mit dem entsprechenden Dichtringelement (A2, A3; A1', A2') abstützen.

4. Schieberelement (10) nach einem der vorhergehenden Ansprüche, wobei das zweite Kolbenteil (14) hülsenartig ausgestaltet ist und das erste Kolbenteil (12) und das dritte Kolbenteil (16) in das zweite Kolbenteil (14) eingesteckt sind.

5. Schieberelement (10) nach Anspruch 4, wobei im ersten und dritten Kolbenteil (12, 14) Steuerbohrungen (62) gebildet sind.

6. Schieberelement (10; 10') nach einem der vorhergehenden Ansprüche, wobei die Kolbenteile (12, 14, 16, 18, 19; 52', 14', 16', 18') miteinander verpresst sind.

7. Schieberelement (10; 10') nach einem der vorhergehenden Ansprüche, wobei die Kolbenteile (12, 14, 16, 18, 19; 52', 14', 16', 18') aus Metall, vorzugsweise Aluminium, gebildet sind.

8. Pneumatischer Steuerblock (216) einer pneumatisch betriebenen Hydraulikpumpe mit einem Steuerschieber als Einsatz in einer Schieberbuchse, wobei der Steuerschieber ein Schieberelement (10; 10') nach einem der vorhergehenden Ansprüche ist.

## Claims

1. Multi-part spool member(10; 10') with an outer seal for a pneumatically operated hydraulic pump, the spool member (10; 10') having a first and second piston part (12, 14; 52', 14') connected to one another and a third piston part (16; 16') connected to the second piston part (14; 14'), the spool member also having a first sealing ring element (A2, A1') and a second sealing ring element (A3; A2'), wherein the first and second sealing ring elements consist of a plastic and wherein the first sealing ring element (A2, A1') is arranged axially between the first and second piston part (12, 14; 52', 14') as an outer seal and wherein the second sealing ring element (A3, A2') is arranged axially between the third piston part (16; 14') and the second piston part (16; 14') as an outer seal; 16') and the second piston part (14; 14') as an outer seal,
**characterised in that**
the first and second sealing ring elements (A2, A3; A1', A2') are each C-shaped or V-shaped with an axial opening and the sealing ring elements (A2, A3; A1', A2') are arranged in the multi-part spool member (10; 10') oriented in such a way that the axial openings are facing away from the second piston part (14; 14'); 14'), wherein a stop step is formed in each of the outer surface of the third piston part (16; 16') and the outer surface of the first piston part (12; 52'), against which the corresponding sealing ring element (A2, A3; A1', A2') is supported, so that the axial openings are at least partially exposed.

2. Spool member (10; 10') according to claim 1, wherein the plastic is at least coated with PTFE or consists of PTFE.

3. Spool member (10; 10') according to claim 1 or 2, wherein the second piston part (14; 14') has axially opposite stop surfaces (22, 24) against which in each of the first and third piston parts (12, 16; 52', 16') together with the corresponding sealing ring element (A2, A3; A1', A2') are supported.

4. Spool member (10) according to one of the preceding claims, wherein the second piston part (14) is of sleeve-like design and the first piston part (12) and the third piston part (16) are inserted into the second piston part (14).

5. Spool member (10) according to claim 4, wherein control bores (62) are formed in the first and third piston parts (12, 14).

6. Spool member (10; 10') according to one of the preceding claims, wherein the piston parts (12, 14, 16, 18, 19; 52', 14', 16', 18,) are grouted with each other.

7. Spool member (10; 10') according to one of the preceding claims, wherein the piston parts (12, 14, 16, 18, 19; 52', 14', 16', 18,) are made of metal, preferably of aluminum.

8. Pneumatic control block (216) of a pneumatically operated hydraulic pump having a control spool as an insert into a spool bushing, wherein the control spool is a spool member (10; 10') according to one of the preceding claims.

## Revendications

1. Elément à tiroir (10; 10') en plusieurs parties comportant une garniture d'étanchéité extérieure pour pompe hydraulique à entraînement hydraulique, ledit élément à tiroir (10; 10') comprenant des première et deuxième parties de piston (12, 14; 52',14') reliée l'une à l'autre et une troisième partie de piston (16, 16') reliée à ladite deuxième partie de piston (14; 14'), ledit élément à tiroir comprenant en outre une première bague d'étanchéité (A2, A1') et une deuxième bague d'étanchéité (A3; A2'), lesdites première et deuxième bagues d'étanchéité étant en matière plastique et ladite première bague d'étanchéité (A2, A1') étant disposée axialement entre lesdites première et deuxième parties de piston (12, 14; 52',14') en tant que garniture d'étanchéité extérieure, ladite deuxième bague d'étanchéité (A3, A2') étant disposée axialement entre ladite troisième partie de piston (16; 16') et ladite deuxième partie de piston (14; 14') en tant que garniture d'étanchéité extérieure
**caractérisé en ce que**
lesdites première et deuxième bagues d'étanchéité (A2, A3; A1', A2') sont réalisées, chacune, en forme de C ou de V présentant une ouverture axiale et les bagues d'étanchéité (A2, A3; A1', A2') sont orientée de telle façon sur ledit élément à tiroir (10; 10') en plusieurs parties que les ouvertures axiales font face à une direction opposée à ladite deuxième partie de piston (14; 14'), dans la surface latérale de ladite troisième partie de piston (16; 16') et dans la surface latérale de ladite première partie de piston (12; 52'), respectivement, étant formé un gradin servant de butée contre lequel la bague d'étanchéité (A2, A3; A1', A2') respective est en appui de façon que les ouvertures axiales sont au moins en partie exposées.

2. Elément à tiroir (10; 10') selon la revendication 1, dans lequel ladite matière plastique est munie d'un revêtement PTFE ou elle est fabriquée en PTFE.

3. Elément à tiroir (10; 10') selon la revendication 1 ou 2, dans lequel ladite deuxième partie de piston (14; 14') comprend des faces de butée (22, 24) axialement opposées l'une à l'autre sur lesquelles respectivement une desdites première et troisième parties de piston (12, 16; 52', 16') ensemble avec la bague d'étanchéité (A2, A3; A1', A2') respective est en appui.

4. Elément à tiroir (10) tiroir selon l'une quelconque des revendications précédentes, dans lequel la deuxième partie de piston (14) est réalisée en forme de douille, et ladite première partie de piston (12) et ladite troisième partie de piston (16) sont insérées dans ladite deuxième partie de piston (14).

5. Elément à tiroir (10) selon la revendication 4, dans lequel des alésages de commande (62) sont réalisés dans lesdites première et troisième parties de piston (12, 14).

6. Elément à tiroir (10; 10') selon l'une quelconque des revendications précédentes, dans lequel les parties de piston (12, 14, 16, 18, 19; 52', 14' 16', 18') sont unifiés par pressage.

7. Elément à tiroir (10; 10') selon l'une quelconque des revendications précédentes, dans lequel les parties de piston (12, 14, 16, 18, 19; 52', 14' 16', 18') sont en métal, de préférence en aluminium.

8. Bloc de commande pneumatique (216) d'une pompe hydraulique à entraînement hydraulique, comprenant un élément de commande à tiroir pour insertion dans une douille de tiroir, ledit élément de commande à tiroir étant un élément à tiroir (10; 10') selon l'une quelconque des revendications précédentes.
